# EUROPEAN PATENT APPLICATION

(11) **EP 3 128 478 A1**
(43) Date of publication of application: **08.02.2017**
(21) Application number: 16768978.5
(22) Date of filing: 07.01.2016
(51) Int. Cl.: G06Q 20/32, G06Q 20/34

(54) **PAYMENT PROCESSING SYSTEM USING ENCRYPTED PAYMENT INFORMATION, AND METHOD THEREFOR**

(30) Priority: 24.03.2015 KR 20150040710
(71) Applicant: Jini Co. Ltd., Jeonju-si, Jeollabuk-do 54853 (KR)
(72) Inventor: JEONG, Hye Jin, Iksan-si Jeollabuk-do 54625 (KR)
(74) Representative: Awapatent AB
(86) International application number: PCT/KR2016/000145
(87) International publication number: WO 2016/153159

(57) **Abstract**

The present invention relates to a payment processing system and a payment processing method using an encrypted payment information. The payment processing system of the present invention requests a payment service using a personal IC card which card information and personal information are saved in and is registered in an agent. The payment processing system of the present invention may authenticate a user identification through a wireless communication between a card reader and a mobile terminal unit. Also, the payment processing system may prevent leakage of user information, card information and payment information through a process that the card information and the payment information are encrypted in the card reader and decrypted in the agent. The payment processing system may provide financial payment service with more cheap costs.
According to the present invention, the security problems which can be caused by card payment processes can be solved.

## Description

### TECHNICAL FIELD

The present invention relates to a payment processing system, and more particularly, to a payment processing system and a payment processing method which register information of a user and a card in an agent using a payment processing application which encrypts payment information. By installation of the payment processing mobile application at a mobile terminal unit, the mobile terminal unit transmits encrypted card information when a card reader reads the card information in a process of payment via on-off line. The mobile terminal unit transmits the encrypted card information and payment information to the agent, then, the agent decrypts the encrypted card information and provides it with payment information to a bank server for payment amount to be paid in a seller's account or electronic wallet.

### BACKGROUND ART

The development of wireless-communication and mobile technology causes users may use financial services via the mobile technology anywhere and anytime. Especially, smart phones vitalize recently using the phone as an electronic wallet which makes a user to pay with the smart phone without credit cards, or etc. To use electronic wallet of an IC card type, there must be an IC card which includes the electronic wallet function and a separated terminal unit which can read the IC card.

Genereally, a process of a card payment is: 1) a customer purchases a good with a credit card at a store which designated by a card company; 2) a card reader of the store read the card number; and 3) the store sends the information of the store and the bill to a server of a bank or the card company requesting an approval of the card payment via VAN or PG (Payment Gateway) which is connected with off-line stores, on-line shopping mall or other various on-line services.

However, this kind of a card payment process has risks such as disclosure of the card owner's financial information to the store, fininacial crimes with the disclosed information, or counterfeiting of the card by third parties.

### [Related Art Documents]

Patent Document 1: Korean patent Application Laid-Open Publication No. 10-2010-0060707 (publication date: June 7, 2010)
Patent Document 2: Korean patent Application Laid-Open Publication No. 10-2014-0074732 (publication date: June 18, 2014)
Patent Document 3: Korean patent Application Laid-Open Publication No. 10-2013-0057939 (publication date: June 3, 2013)
Patent Document 4: Korean Patent No. 10-1309749 (Issue date: September 23, 2013)

### DISCLOSURE OF INVENTION

### TECHNICAL PROBLEM

An object of the present invention is to provide a payment process system and its method which use a personal IC card where card information and personal information are saved for improving a security of the payment process.

Another object of the present invention is to provide the payment system and its method which use a personal IC card that includes OPT and user authentication functions for the security.

Another object of the present invention is to provide the payment system and its method which encrypt payment information in its on-off line payment process to minimize the risk of personal information leakage.

Another object of the present invention is to provide the payment system and its method which make an agent to decrypt information of a card and a payment which were encrypted and received from a card reader, and to send a request for an approval of the card payment to a server of a bank and a card company.

Another object of the present invention is to provide the payment system and its method which support various ways of payment such as an account transfer, an electronic wallet or etc. depending on customer's request. However, the objects of the present disclosure are not limited to the aforementioned objects, and other objects, which are not mentioned above, will be apparent to a person having ordinary skill in the art from the following description.

### TECHNICAL SOLUTION

In order to achieve the objects, an aspect of the present invention is directed to a payment processing system that provides a personal IC card where card information and personal information are saved and a card reader for user authentication in a process of a payment with the personal IC card. This payment process system of the present invention may improve a security of the card payment process.

According to the aspect of the present invention, the payment process system including: a personal IC card in which card information and personal information are saved; and a card reader which reads the card information from the personal IC card, encrypts at lease a part of the card information, and transmits the encrypted card information and an identification of the card reader to complete the payment via on-off line with the personal IC card.

According to an exemplary embodiment of the aspect, the card reader may check the user using a predetermined secret key for the personal IC card if the card information and the personal information are encrypted in the personal IC card and decrypt the encrypted card information.

In another exemplary embodiment of the aspect, the card reader may re-encrypt the decrypted card information and transmit the encrypted card information together with the identification of the card reader.

In another aspect of the present invention, a payment process system provides a personal IC card where card information and personal information are saved and uses a payment processing mobile application which checks a requesting user between a card reader and a mobile terminal unit in a process of a payment with the personal IC card. This payment process system of the present invention may improve a security matter in a process of a payment.

According to the another aspect of the present invention, the payment process system includes: a personal IC card in which card information and personal information are saved; a card reader which reads the card information from the personal IC card, encrypts at lease a part of the card information, and transmits the encrypted card information and the identification of the card reader; a mobile terminal unit which receives the encrypted card information and the identification of the card reader from the card reader, generate payment information which includes an identification of a requesting user who requested the payment service, payment amount information and an identification of the mobile terminal unit, and then requests an payment approval; and an agent which contains the card information, the personal information, the identification of the card reader, and the identification of the mobile terminal unit receives the request of payment approval with the payment information from the mobile terminal unit, decrypts the encrypted card information and the encrypted payment information which are from the mobile terminal unit, and requests the payment to a server of a bank or a card company which corresponds to the personal IC card for the payment amount to be paid to a seller.

According to an exemplary embodiment of the another aspect, the card reader may check the reqesting user using a secret key for the personal IC card if the card information and the personal information are encrypted in the personal IC card, then receive the encrypted card information from the personal IC card if the user is authenticated, and decrypt the encrypted card information. Here, the card reader may receive a decrypted card information which is decrypted in the personal IC card. Also, the encrypted card information may be decrypted in the mobile terminal unit.

In another exemplary embodiment, the card reader may receive the secret key from the mobile terminal unit, and provide the secret key to the personal IC card for the user authentication.

In another exemplary embodiment, the card reader may encrypt the decrypted card information for decryption in the mobile terminal unit, and transmit the encrypted card information with the identification of the card reader to the mobile terminal unit.

In another exemplary embodiment, the card reader, to decrypt the encrypted card information in the personal IC card, may include: an user authentication module which transmits the secret key to the personal IC card to determine whether the requesting user who requested the payment is a permitted user; and an encryption module which encrypts the card information if the user is authenticated and then transmits the encrypted card information with the identification of the card reader to the mobile terminal unit.

In another exemplary embodiment, the mobile terminal unit may include an another card reader if the payment requesting user is a seller.

In another exemplary embodiment, the agent may receive the payment information from the mobile terminal unit, check the requesting user using the identification of the requesting user and the identification of the card reader, ecrypt the payment information if the requesting user is authenticated, and transmit the encrypted payment information with a decrypting key for the server of a bank or a card company to decrypt the encrypted payment information to the server of a bank or a card company requesting the payment approval.

In another exemplary embodiment, the agent may include: a customer registration module which registers a cardholder of the personal IC card, a user of the card reader, a user of the mobile terminal unit as a membership registration, and checks the requesting user when there is the request for the payment approval; an encryption-decryption module which decrypts the encrypted payment information transmitted from the mobile terminal unit, or transmits the encrypted payment information to the server of the bank or the card company after encrypting the payment information; a control unit which processes all performances of the agent through controlling a payment processing application which includes a payment requesting module which transmits the payment information to the server of the bank or the card company requesting the payment; a communication unit which is connected with the mobile terminal unit and the server of bank or the card company through a communication network to enable a mutual data communication with the mobile terminal unit and the server of bank or the card company; a storage unit which saves the payment processing application; and a database which saves, under the control unit's controlling and in accordance to the payment processing application's processing steps, at least the personal information, the identification of the card reader, the identification of the mobile terminal unit, the identification of the requesting user, the payment information, and the information of the server of bank or the card company.

In another aspect of the present invention, the present invention is directed to a payment processing method.

According to the another aspect, the payment processing method includes: reading, by a card reader, card information and personal information from a personal IC card, wherein an agent of a payment process system contains permitted users' card information and personal information as a registration; transmitting by the card reader, after encrypting the card information, the encrypted card information to a mobile terminal unit of the payment processing system with an identification of the card reader; requesting for a payment approval, by the mobile terminal unit, to the agent transmitting payment information which is generated by the mobile terminal unit and includes the encrypted card information, an identification of the mobile terminal unit, an identification of a requesting user and payment amount information to the agent; checking, by the agent, whether a requesting user is a permitted user using the payment information which is transmitted from the mobile terminal unit; requesting for the payment, by the agent, to a server of a bank or a card company transmitting the payment information to the server if the requesting user is the permitted user as a result of the checking; and approving, by the server of the bank or the card company, the payment after receiving the payment information from the agent for the payment amount to be paid to a seller.

According to an exemplary embodiment of the another aspect, the reading of the card reader may include providing a secret key to the personal IC card if the card information and the personal information are encrypted in the personal IC card for the card reader to decrypt the encrypted information.

According to another exemplary embodiment, in the reading of the card reader, the secret key may be input directly on the card reader, or received from the mobile terminal unit.

According to another exemplary embodiment, the transmitting of the card reader may include transmitting, by the card reader, a first decryption key together with the the encrypted card information and the dentification of the card reader to the mobile terminal unit for the mobile terminal unit to decrypt the encrypted card information.

According to another exemplary embodiment, the requesting for a payment approval of the mobile terminal unit may include transmiting, by the mobile terminal unit, a second decryption key together with the payment information to the agent for the agent to decrypt the encrypted card information which is included in the payment information.

According to another exemplary embodiment, the checking of the agent may include checking, by the agent, if the identification of the requesting user is the permitted user which is registered in the agent.

According to another exemplary embodiment, the requesting for the payment of the agent may include transmitting, by the agent, a descrpted payment information to the server of the bank or the card company after decrypting the encrypted payment information, or transmitting, by the agent, a third decryption key to the server of the bank or the card company with the encrypted payment information for the server to decrypt the encrypted payment information.

It is to be understood that both the foregoing general description and the following detailed description of the present invention are exemplary and explanatory and are intended to provide further explanation of the invention as claimed.

### ADVANTAGEOUS EFFECTS

As described above, the payment processing system of the present invention can prevent the leakage of information regarding users, cards and payments through the process of the user authentication in the communication between the card reader and the mobile terminal unit and the process of the encryption of the card reader for the information regarding cards and payments and the decryption of the agent for the encrypted information, and can provide more cheap services for the payment.

Therefore, the present invention, through solving the security problem which may occur in process of card payments, can vitalize the market of products which involve payment functions.

### BRIEF DESCRIPTION OF THE DRAWINGS

The accompanying drawings, which are included to provide a further understanding of the inention and are incorporated in and constitute a part of this application, illustrate embodiments of the inention and together with the decription serve to explain the principle of the invention. In the drawings:
FIG. 1 is a diagram illustrating a configuration of network for a payment processing system according to an embodiment of the present invention;
FIG. 2 is a diagram illustrating a configuration for an agent of the payment processing system in FIG. 1 according to an embodiment of the present invention;
FIG. 3 is a flowchart illustrating a payment processing sequence of the payment processing system according to an embodiment of the present invention;
FIG. 4 is a flowchart illustrating a processing sequence of a card reader according to an embodiment of the present invention; and
FIG. 5 is a flowchart illustrating a processing sequence of the agent according to an embodiment of the present invention.

### BEST MODE FOR CARRYING OUT THE INVENTION

Exemplary embodiments of the present invention can have other modifications and variations, and the scope of this present invention should not be limited by the embodiments described below. These exemplary embodiments of the present invention are provided in order to better explain the present invention to others skilled in the art. Thus, the some of elements of the drawing are exaggerated in their shape for a clear explanation.

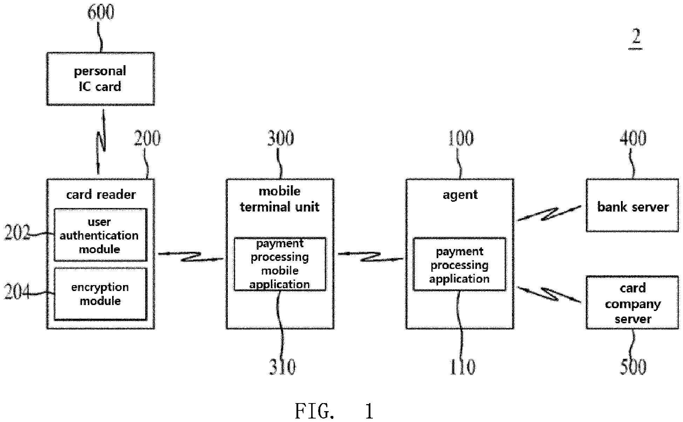

Hereinafter, embodiments of the present invention will be described in detail with reference to FIG. 1 to FIG. 5.

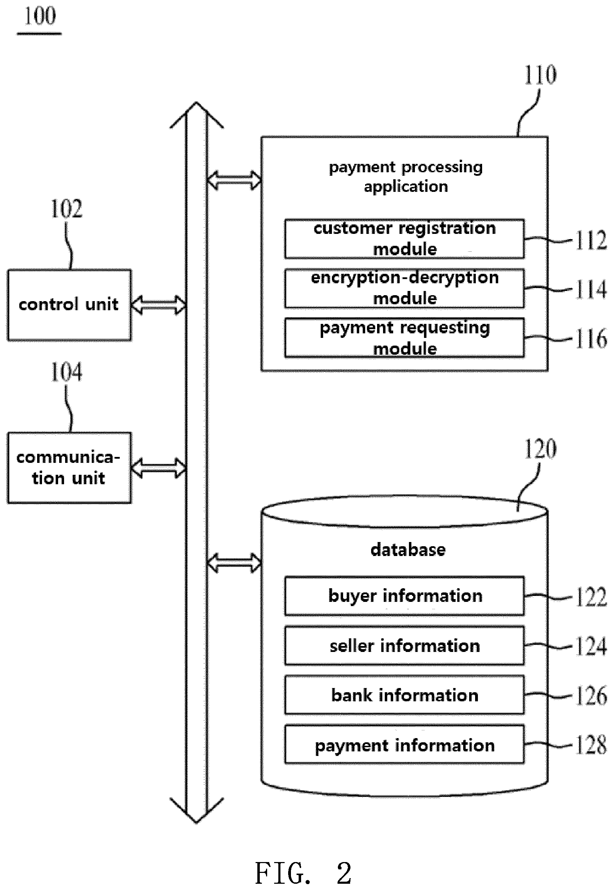

FIG. 1 is a diagram illustrating a configuration of network for a payment processing system, and FIG. 2 is a diagram illustrating a configuration for an agent of the payment processing system in FIG. 1 according to an embodiment of the present invention.

As shown in FIG. 1, the a payment processing system 2 of the present invention, to prevent leakage of card information, personal information, or etc and counterfeiting of the card and to improve security of card payments, carrys out the payments in on-off line using a personal IC card 600 which contains card information and personal information together and an agent 100 which requests directly a payment to a bank or performs a re-charching process for customers' electric wallet in either a face-to-face payment or a non-face-to-face payment. This payment processing system 2 enables an authentication of a personal identification based on the personal IC card 600 and a payment service if the user who is requesting the payment approval is permitted to access the information of the personal IC card 600.

As an example, in the face-to-face payment, customers pay at off-line stores, markets or etc. using their card, and in the non-face-to-face payment, pay through on-line services such as Amazon, Ebay or etc.

For this, the payment processing system 2 of the present invention includes the personal IC card 600, a card reader 200, a mobile terminal unit 300, an agent 100, a bank server 400, and the card company server 500. Also, the payment processing system 2 may include VAN system or PG system between the agent 100 and the bank server 400 or between the agent 100 and the card company server 500 even though they are not illustrated in the drawing.

Card information and personal information of a requesting user, which are necessary for the user authentication and the payment process, are saved in the personal IC card 600. For example, the card information includes an identification of card companies (or banks), a card number, a card expiration date, and etc., and the personal information includes a cardholder's name, driver license numbers, address, card issuance date, date of birth, passfort number, and etc.

An algorithm is embedded in the personal IC card 600, which can encrypt the card information and the personal information and decrypt the encrypted information with a secret key provided from the card reader 200. Also, the card reader 200 may provide the secret key to the personal IC card 600 after receving the secret key from the mobile terminal unit 300. The personal IC card 600 includes a IC chip where the card information, the personal information and the argorithm are saved.

Thus, the card information and the personal information can be encrypted and saved depending on a case of the personal IC card 600. The personal IC card 600 can decryt data with the secret key which is from the card reader 200 or the mobile terminal unit 300. The personal IC card 600 cannot decrypt the encrypted card information and the encrypted personal information if the secret key is wrong.

The card reader 200 reads the card information and the personal information from the personal IC card 600. When there is a payment request, and the the card reader 200 can request the card information and the personal information separately or together.

The card reader 200 encrypts the card information which is read from the personal IC card 600, and transmits the encrypted information to the mobile terminal unit 300 together with an identification of the card reader itself. Here, the card reader 200 may transmit a decryption key together with the encrypted information in order to enable decrypting. Also, the mobile terminal unit 300 may include the decrytion key to decrypt the encrypted information. Also, the encrypted information of the personal IC card 600 may be decrypted in the mobile terminal 300 unit instead of the card reader 200, and the card reader 200 may transmit only the identification of the card reader to the mobile terminal unit 300. In this exemplary embodiment, the card reader 200 includes: a user authentication module which transmits the secret key to the personal IC card 600 to read the encrypted card information from the the personal IC card 600 and to check if a requesting user is a permitted user; and an encryption module which encrypts the card information and transmits the encrypted card information to the mobile terminal unit 300 with the identification of the card reader if the secret key is correct. Here, the card information is encrypted except a bank identification or a card company identification.

The mobile terminal unit 300 which is used by the requesting user requests a payment approval to the agent 100 transmitting an identification of the mobile terminal unit 300 which includes an identification of the requesting user. Here, the requesting user may be either a seller or a buyer. For example, in a case that the requesting user is the seller, the mobile terminal unit 300 includes the another card reader 200, a delivery man delivers a product having the mobile terminal unit 300, and a payment service may be requested on the place of the delivery. A payment processing mobile application 310 is installed in the mobile terminal unit 300 through downloading, or etc., and the mobile terminal unit 300 processes a user authentication and requests the payment service using the application. Also, in a case that the buyer uses the mobile terminal unit 300, the buyer checks the seller or an identification of the seller and sales information such as a name of a product, a price, and etc, and requests the payment to the agent 100 though a designated bank or an electric wallet.

The agent 100, if the identification of the requesting user and the payment amount are transmitted from the mobile terminal unit 300, checks if the requesting user is a permitted user using the identification of the requesting user and the identification of the card reader 200. The agent 100, if the requeting user is the permitted user, encrypts the payment information such as the card information, the identification of the requesting user and the payment amount, and transmits the payment information to the bank server 400 or the card company server 500 requesting a payment approval.

Also, the agent 100, when the agent requests the payment approval, transmits a decryption key to the bank server 400 or the card company server 500 to enable the server to decrypt the encrypted payment information. Here, the agent 100 is defined as a system or a process which relays the payment work in the middle of multiple devices using a network in the payment processing system 2, and may communitate with other agents for information, resources, or etc. through communication channels. As an another example, if the agent 100 requests the payment approval, the bank server 400 or the card company server 500 may request decryption to the agent 100, and the agent 100 may decrypt the payment information.

Specifically, as shown in FIG. 2, the agent 100 of the exemplary embodiment includes a control unit 102, a communication unit 104, a payment processing application 110, a storage unit (not in the drawing) and a database 120. Also, the agent 100 may include elements of a general computer system such as a CPU, a memory, an input, an output and etc.

The communication unit 104 is connected to the mobile terminal unit 200, the bank server 400, and the card company server 500 through communication channels in order to do data communications with the mobile terminal unit 200, the bank server 400, and the card company server 500.

The control unit 102 controls and processes all performances of the agent 100. It is not illustrated in the drawing, but the control unit 102, for example, may include softwares such as operating system program, controlling program, or etc. as well as hardwares such as CPU, memory, web-server, or etc.

The control unit 102 registers the personal IC card 600, the card reader 200, and the mobile terminal unit 300 as a customer using the payment processing application 110. Also, the control unit 102 encrypts or decrypts the payment information which is transmitted from the mobile terminal unit 300, and processes the payment request providing the payment information to the bank server 400 or the card company server 500.

The payment processing application 110 is saved in the storage unit (not in the drawing) of the agent 100 and controlled by the control unit 102. The payment processing application 110 reads various information from the database 120, or saves various information in the database 120 depending on the payment processes. Also, the payment processing application 110 may be provided as a web browser or an application program which is installed in the mobile terminal unit 300.

The user of the personal IC card 600, the card reader 200 and the mobile terminal unit 300 are regitered as a customer by the payment processing application 110. The payment processing application 110 requests the payment to the bank server 400 or the card company server 500 after checking the requesting user and decrypting the encrypted payment information if the mobile terminal unit 300 requests the payment approval transmitting the encrypted payment information.

The payment processing application 110 of the exemplary embodiment includes: a customer registration module 112 which registers the user of the personal IC card 600, the card reader 200, the mobile terminal unit 300 as a membership registration, and checks if the requesting user is a permitted user when there is a request for the payment approval; an encryption-decryption module 114 which decrypts the encrypted payment information transmitted from the mobile terminal unit, and transmits the encrypted payment information to the bank server 400 or the card company server 500 after encrypting the payment information; and a payment requesting module 116 which requests the payment to the bank server 400 or the card company server 500.

Various information, under controlling by the control unit 102, is saved in the database 120 depending on processes of the payment processing application 110. In this exemplary embodiment, the database 120 is included in the agent 100, but the database may exist as a separated database server.

In this exemplary embodiment, in a case a user of the personal IC card 600 and the mobile terminal unit 300 is a buyer, a buyer information 122 which includes personal information of the user of the mobile terminal unit 300 is saved in the database 120. If a user of the card reader 200 and the mobile terminal unit 300 is a seller, a seller information 124 which includes personal information of the user of the mobile terminal unit 300 is saved in the database 120. In both cases, a bank information 126 which includes an identification of bank which is to approve the payment and a payment information 128 which includes the payment amount, the identification of the card reader 200 and the identification of the mobile terminal unit 300 are saved in the database 120.

As shown in FIG. 1, the bank server 400 or the card company server 500 receives the payment information from the agent 100 through a coummunication channel, and permits a transfer of the payment amount to the seller's account or electric wallet if the requesting user's account have the payment amount or there is nothing wrong for the payment approval.

To sum up, in the payment processing system 2 of the present invention, if the personal IC card 600 which is registered in the agent 100 is read by the card reader 200, a secret key for a user authentication is provided from the card reader or the mobile terminal unit 300. If a requesting user is a permitted user, the carder reader 200 encrypts the card information which is read from the personal IC card 600 and other information related to the payment and transmits the encrypted information to the mobile terminal unit 300. The encrypted information is transmitted from the mobile terminal unit 300 to the agent 100, and the agent 100 proceses the payment through decrypting the encrypted information.

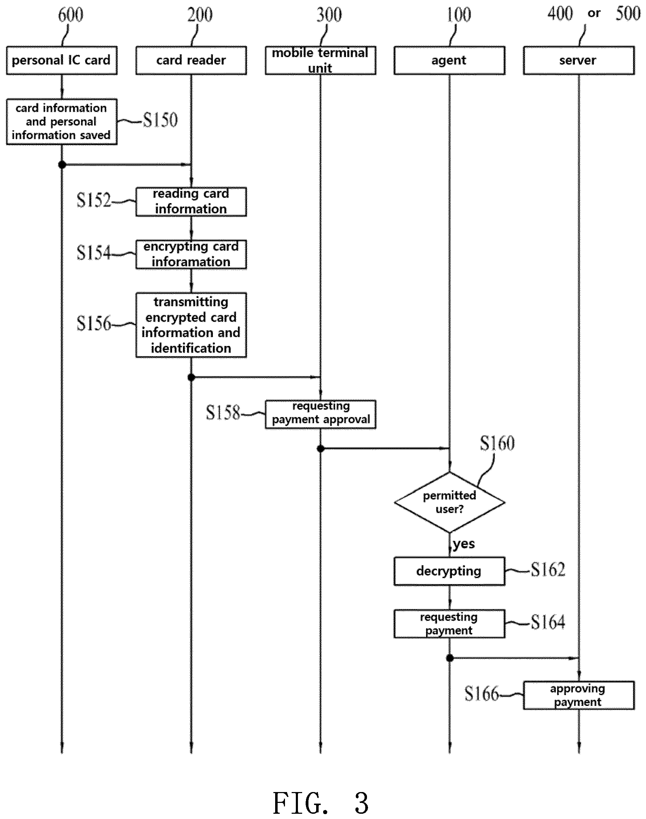

Hereinafter, methods of the payment processing system of the present invention will be described in detail with reference to FIG. 3 to FIG. 5.

FIG. 3 is a flowchart illustrating a payment processing sequence of the payment processing system. This sequence is processed with mutual communications of the card reader 200, the mobile terminal unit 300, the agent 100, the bank server 400, and the card company server 500 depending on the payment processing application 110.

In the step, S150, of FIG. 3, card information and personal information are saved in the personal IC card 600. If the personal IC card 600 is issued from the agent 100, the card information and the personal information are registered in the agent at the time of the issuance. If the personal IC card 600 is issued from a bank or a card company, the card information and the personal information may be registered in the agent 100 in advance to be used in the payment service of the present invention. Also, the card information and the personal information may be saved in the personal IC card 600 after encryption.

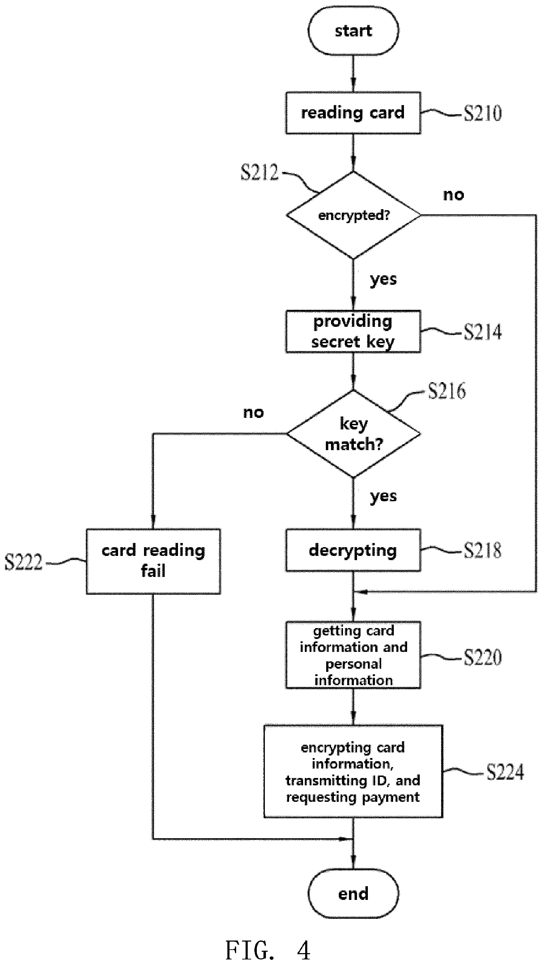

In the step, S152, the card reader 200 reads the card information and the personal information. Here, the card reader 200 may read the personal IC card 600 in either way of face-to-face or non-face-to-face. Also, the card reader 200, if the card information and the personal information are encrypted in the personal IC card 600, provides a secret key to the personal IC card 600 for decryption as shown in FIG. 4.

In the step, S154, the card reader 200 encrypts information related to the payment. The card reader 200 encryts necessary information for a request of a payment approval out of the card information and the personal information. In this exemplary embodiment, the card reader 200 encrypts the information except identifications of a bank or a card company. Here, a decryption key for decryption of the encryption may be embedded in the card reader 200 or provided from the mobile terminal unit 300.

In the step, S156, the card reader 200 transmits the encrypted card information to the mobile terminal unit 300 with the identification of the card reader 200.

In the step, S158, the mobile terminal unit 300 generates a payment information which includes the encrypted card information, the identification of the mobile terminal unit, the identification of the requesting user and the payment amount, and transmit the generated payment information to the agent 100 requesting the payment approval.

In the step, S160, the agent 100 receives the payment information from the mobile terminal unit 300, and checks if the requesting user is a permitted user. This means the agent 100 checks whether the identification of the requesting user which is transmitted from the mobile terminal unit 300 is same with the identification of the permitted user who is registered in the agent 100.

As a result of the checking of the agent, if the requesting user is authenticated as the permitted user, in the step, S162, the agent decrypts the encrypted payment information, and then, in the step, S164, transmits the payment information to the bank server 400 or the card company server 500 which is deginated by the permitted user requesting the payment. Here, the agent 100 does not permform the request of the payment if the requesting user is not the permitted user. Also, the agent 100 may transmit a decryption key which enables decryption of the encrypted payment information to the bank server 400 or the card company server 500 together with the encrypted payment information, and the bank server 400 or the card company server 500 performs the decryption with the decryption key. Also, the agent 100 may inform the bank server 400 or the card company server 500 that the agent receives the request for the payment approval, then, receive a request from the bank server 400 or the card company server 500, and transmit only some necessary information which is decrypted by the agent as requested from the bank or the card company out of the encrypted payment information.

In the step, S166, the bank server 400 or the card company server 500 receives the payment information such as the identification of the requesting user, the identification of the mobile terminal unit, the identification of the bank or the card company, and the payment amount depending on a case of the request for payment approval, and approves the payment transferring the payment amount to a seller's account or electoic wallet.

FIG. 4 is a flowchart illustrating a processing sequence of a card reader according to an embodiment of the present invention. This processing sequence of the card reader 200 is for the case that the encrypted card information and the encrypted personal information are saved in the personal IC card 600.

In the step, S210, of FIG. 4, the card reader 200 reads the card information and the personal information from the personal IC card 600 in either way of face-to-face or non-face-to-face. In the step, S212, the card reader 200 checks if the card information and the personal information are encrypted.

As a result of the checking, if the card information and the personal information are encrypted, in the step, S214, the card reader 200 provides a secret key to the personal IC card 600 for a user authentication. Here, the secret key may be input directly on the card reader 200, or may be input from the mobile terminal unit 300 after the card reader 200 requests the secret key to the mobile terminal unit 300. Also, the sequence proceeds to the step, S220, if the card information and the personal information are not encrypted.

In the step, S216, the card reader 200 checks if the secret key is the same as the predetermined secret key in the personal IC card 600. If the two secret keys are same, proceeding to the step, S218, the card reader 200 decrypts the encrypted card information and the encrypted personal information. Here, the card reader 200 may receive a decrypted information from the personal IC card 600 which is decrypted by the personal IC card 600. If the two secret keys are not same, proceeding to the step, S222, the sequence ends (the reading of the card information is failed).

In the step, S220, the card reader 200 obtains the decrypted card information and the decrypted personal information, in the step, S224, encrypte the card information, and transmits the encrypted card information to the mobile terminal unit 300 with an identification of the card reader 200 requesting a payment approval.

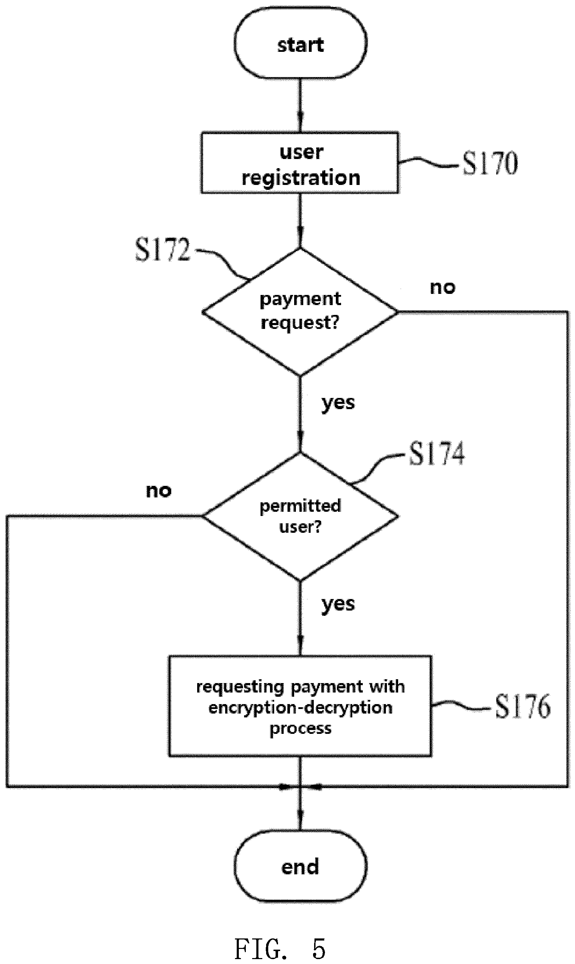

FIG. 5 is a flowchart illustrating a processing sequence of the agent according to an embodiment of the present invention. The processing sequence shows that the agent 100 checks if the requesting user is a permitted user after receiving the payment information from the mobile terminal unit 300.

As shown in FIG. 5, in the step, S170, customer information which includes the card information and the personal information of the cardholder is registered in the agent 100 in advance when the personal IC card 600 is issued. Also, identifications of the seller, the seller's card reader 200 and the seller's mobile terminal unit 300 are registered in the agent 100 as the customer information.

Here, a seller may register additionally, in the agent 100, a bank account or an electric wallet information which can receive a payment amount. This process of the customer registration is performed using the payment processing application 110 which can be down loaded from the agent 100 and installed in the card reader 200 and the mobile terminal unit 300.

In the step, S172, a user requests a payment approval, then, in the step, S174, the agent 100 checks if the requesting user is a permitted user who is registered as a customer in the agent 100. If the requesting uer is the permitted user, proceeding to the step, S176, the agent requests the payment to the bank server 400 or the card company server 500 transmiting the payment information to the bank server 400 or the card company server 500 with encryption and decryption process. If the requesting user is not the permitted user, the agent 100 ends the processing sequence and the request of payment approval is failed.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A payment processing system comprising:
a personal IC card where a card information is saved;
a card reader checking a cardholder with the card information read from the personal IC card, re-encrypting at least a part of the card information, transmitting the re-encrypted card information and an identification of the card reader;
a mobile terminal unit receiving the re-encrypted card information and the identification of the card reader, generating a payment information which includes the re-encrypted card information, the identification of the card reader, an identification of a requesting user who requests a payment service, a payment amount and an identification of the mobile terminal unit, and requesting a payment approval; and
an agent containing, through a membership registration, a card information list, an identification list of the card reader and an identification list of the mobile terminal unit, receiving the payment information from the mobile terminal unit if the payment approval is requested from the mobile terminal unit, decrypting the payment information if at least a part of the payment information is encrypted, requesting a payment to a bank server or a card company server which corresponds to the personal IC card for the payment amount to be paid to a seller;
wherein the card information of the personal IC card includes at least an identification of the cardholder and a card number;
wherein the card reader, if at least the card information is encrypted in the personal IC card, receives a secret key from the mobile terminal unit, provides the secret key to the personal IC card for a decryption of the card information and for a user authentication, if the user authentication is successful, receives the encrypted card information, decrypts the encrypted card information, re-encrypts the decrypted card information to be decrypted in the mobile terminal unit, and transmit the re-encrypted card information and the identification of the card reader to the mobile terminal unit; and
wherein the agent checks if the requsting user is a permitted user using the identification of the requesting user and the identification of the card reader, if the requesting user is the permitted user, encrypts the payment information, transmits the ecrypted payment information and a decryption key which is to decrypt the encrypted payment information to the bank server or the card company server requesting the payment.

2. The system of claim 1, wherein the card reader comprises:
a user authentication module reading the encrypted card information from the personal IC card by transmitting the secret key to the personal IC card for the user authentication; and
an encryption module re-encrypting the decrypted card information and transmitting the re-encrypted card information and the identification of the card reader to the mobile terminal unit.

3. The system of claim 1, wherein the mobile terminal unit comprising a second card reader if the requesting user is the seller.

4. The system of claim 1 or claim 2, wherein the agent comprises:
a customer registration module containing the card information list, the identification list of the card reader and the identification list of the mobile terminal unit as the membership registration, and checking if the requesting user is the permitted user;
a encryption-decryption module decrypting the payment information from the mobile terminal unit, re-encrypting the decrypted payment information, transmitting the encrypted payment information to the bank server or the card company server;
a control unit controlling a payment processing application which comprises a payment requesting module which transmits a request of the payment with the encrypted payment information to the bank server or the card company server;
a communication unit performing a mutual data communication with the mobile terminal unit, the bank server or the card company server through communication channels which are connected with the mobile terminal unit, the bank server or the card company server;
a storage unit where the payment processing application is saved; and
a database saving, under a controlling of the control unit and in accordance of the payment processing application's processes, at least an information of the personal IC card, the identification of the card reader, the identification of the mobile terminal unit, the identification of the requesting user, the payment information, and an information of the bank server or the card company server.

5. A method of a payment processing system comprising:
reading, by a card reader of a payment processing system, a card information from a personal IC card, wherein the card information of the personal IC card is saved in an agent of the payment processing system as a registration;
transmitting, by the card reader, the card information and an identification of the card reader after encrypting the card information to a mobile terminal unit of the payment processing system;
transmitting, by the mobile terminal unit, a payment information which is generated by the mobile terminal unit and includes at least the encrypted card information, an identification of the mobile terminal unit, an identification of a requesting user and a payment amount to the agent with requesting a payment approval to the agent;
checking, by the agent, if the requesting user is a permitted user after receiving the payment information from the mobile terminal unit;
transmitting, by the agent, the request of the payment approval to the bank server or the card company server with the payment information if the requesting user is the permitted user; and
approving, by the bank server or the card company server, for the payment amount to be paid to a seller after receiving the payment information from the agent;
wherein in the reading of the card reader, the card reader provides a secret key to the personal IC card for a decryption of the card information and for a user authentication if the card information is encrypted in the personal IC card, and the secret key is input on the card reader or the secret key is input on the mobile terminal unit and transmited to the card reader;
wherein in the transmitting of the card reader, the card reader transmits a first decryption key to the mobile terminal unit for the mobile terminal unit to decrypt the encrypted card information;
wherein in the transmitting of the mobile terminal unit, the mobile terminal unit transmits a second decryption key to the agent for the agent to decrypt an encrypted payment information; and
wherein in the transmitting of the agent, the agent transmits a decrypted payment information to the bank server or the card company server after decrypting the encrypted payment information, or transmits the encrypted payment information and a third decryption key to the bank server or the card company server for the bank server or the card company server to decrypt the encrypted payment information.

6. The method of claim 5, wherein in the checking of the agent, the agent checks if the identification of the requesting user is a registered user which is registered in the agent.
